# EUROPÄISCHE PATENTSCHRIFT

(11) **EP 0 540 845 B1**
(45) Veröffentlichungstag und Bekanntmachung des Hinweises auf die Patenterteilung: **13.12.1995**
(21) Anmeldenummer: 92114491.1
(22) Anmeldetag: 26.08.1992
(51) Int. Cl.: G01B 3/06

(54) **Drehverbindung zwischen den einzelnen Gliederstäben eines Gliedermasstabes**
Pivoting connection between the individual members of a folding rulers
Liaison pivotante entre les membres individuels d'une règle pliante

(30) Priorität: 06.11.1991 DE 4136509
(43) Veröffentlichungstag der Anmeldung: 12.05.1993
(73) Patentinhaber: BAYERISCHE MASS-INDUSTRIE ARNO KELLER GMBH, 91217 Hersbruck (DE)
(72) Erfinder: Keller, Hans, W-8562 Hersbruck (DE); Dengler, Herbert, Dipl.-Ing., W-8562 Hersbruck (DE)
(74) Vertreter: Matschkur, Götz, Lindner Patent- und Rechtsanwälte

(56) Entgegenhaltungen:
- DE-A- 1 812 436
- DE-A- 3 741 921
- DE-U- 6 947 931
- US-A- 4 406 033

## Beschreibung

Die Erfindung betrifft einen Gliedermaßstab (Zollstock), insbesondere aus Kunststoff, der - aus einzelnen, in Reihe aneinandergelenkten Gliederstäben gebildet - zusammenklappbar ist. Die Gliederstäbe sind an ihren benachbarten Enden über Rastaussparungen einerseits und komplementäre Einrastorgane andererseits drehgelenkig miteinander verbunden, wobei die Rastaussparung mindestens ein selbsttätiges und/oder betätigbares Greifelement aufweist, die das eingerastete Einrastorgan in Ausrastrichtung arretiert. Die Greifelemente können als Schnapphaken und das Einrastorgan kann als entsprechender, pilzförmiger Einschnappvorsprung mit erweitertem, radial geschlitzten und federnd zusammendrückbarem Kopfteil ausgeführt sein, wobei der Schnapphaken beim Einrasten den Kopfteil zur Arretierung in Ausrastrichtung hintergreift.

Ein Kunststoff-Gliedermaßstab etwa dieser Art ist bekannt (DE-OS 1 812 436): Dort wird vorgeschlagen, sowohl die Schnapphaken als auch die Einschnappvorsprünge einstückig mit dem jeweils zugehörigen Gliederstab auszuführen und den Einschnappvorsprung in die Rastaussparung zwischen den Schnapphaken einzudrücken, bis diese zurückfedernd den Kopf des pilzartigen Vorsprungs umgreifen. Diese Art der Rastverbindung ist jedoch nicht sicher, weil beim Verdrehen der Gliederstäbe gegeneinander die Schnapphaken elastisch nach außen federn können, wobei der Kopfteil des Einschnappvorsprungs außer Eingriff geraten bzw. ausrasten kann. Zwar wird deshalb in der genannten Fundstelle weiter vorgeschlagen, die Schnapphaken mittels eines Klemmrings von außen oder die federnden Sektorabschnitte des geschlitzten Einschnappvorsprungs von innen mit einem mittig eingeführten Bolzen oder sonstigen zylindrischen Ansatz jeweils radial festzulegen. Dies erfordert aber beim Verrasten der zwei benachbarten Gliederstäbe stets den Einsatz und die Handhabung eines dritten Teils (Klemmring- oder Bolzen-Element), was den Montageaufwand erhöht. Ist zudem zur Erzielung einer ausreichend stabilen Gelenkverbindung dieses dritte Teil aus Metall hergestellt, während die Gliederstäbe aus Kunststoff bestehen, ergibt sich für die Entsorgung des (nicht mehr gebrauchten) Gliedermaßstabs das Problem, das Kunststoffmaterial vom Metall-Bolzen oder -Ring zu trennen.

Ferner ist ein Gliedermaßstab bekannt (DE-OS 24 02 450), bei dem die Glieder jeweils in ihrer Längsrichtung voneinander lösbar sind. Die Gliederenden sind mit Bohrungen versehen, die jeweils eine abgestufte und gegebenenfalls abgeschrägte Sitzfläche zur Aufnahme eines Zapfenkopfes eines benachbarten Gliedes aufweisen.

Es wird das der Erfindung zugrundeliegende Problem aufgeworfen, einen Gliedermaßstab zu schaffen, der aus einem einzigen Werkstoff, beispielsweise Kunststoff, herstellbar ist und eine feste Drehverbindung zwischen den einzelnen Gliederstäben gewährleistet. Zur Lösung wird bei einem Gliedermaßstab mit den eingangs genannten Merkmalen erfindungsgemäß vorgeschlagen, mindestens ein mit dem Einrastorgan gekoppeltes oder verbundenes Stellelement vorzusehen, welches nach dem Einrasten des Einrastorgans mit mindestens einem zugeordneten Greifelement derart zusammenwirkt, daß das Einrastorgan in Ausrastrichtung arretiert wird.

Der erfindungsgemäße Gliedermaßstab weist also an seinen einzelnen Stabelementen jeweils ein oder mehrere Stellelemente auf, die jedenfalls beim Einrasten in Wirkungsverbindung mit dem Einrastorgan stehen. Dieses beeinflußt und verändert dabei den Zustand der Stellelemente, die sodann in Wirkungsverbindung mit den Greifelementen treten, damit letztere das Einrastorgan am Ende eines Gliederstabes an der zugewandten Seite des benachbarten Gliederstabes weitgehend unlösbar festlegen. Durch die Kopplung bzw. Verbindung der Stellelemente mit dem an einem Stabende angeordneten Einrastorgan ergibt sich die vorteilhafte Möglichkeit, Stellelemente, Einrastorgan und Gliederstab einstückig aus einem einzigen Material zu fertigen. Die Notwendigkeit eines dritten Teiles entfällt, weil die Stellelemente die Funktion der radialen und/oder axialen Verriegelung der Gelenkverbindung zweier benachbarter Gliederstäbe übernehmen.

Konstruktive Konkretisierungsmöglichkeiten dieses Erfindungskonzepts bestehen darin, das Einrastelement als einen von einer Maßstabseite pilzartig vorspringenden Zapfen mit erweitertem Kopfteil und mindestens ein Greifelement als die Rastaussparung begrenzende und federnd nach außen, insbesondere radial, verstellbare Schnapphaken auszuführen, wobei letztere die den gegebenenfalls eingerasteten Kopfteil umgreifen. Diese aus der genannten Fundstelle für sich genommen bekannten Elemente lassen sich dann mit besonderem Vorteil in das Erfindungskonzept integrieren, wenn in weiterer Ausbildung die Stellelemente als Vorsprünge an einer Stabseite derart ausgebildet und angeordnet sind, daß sie beim Einrasten mindestens einen Schnapphaken von außen verriegeln, beispielsweise direkt hintergreifen oder mit freiem Abstand bzw. Spielraum blockieren. Der freie Abstand bzw. Spielraum ist nützlich, um eine leichte Verdrehbarkeit der zwei aneinandergelenkten Gliederstäbe zu erzielen. Der Konstruktionsgedanke mit von einer Stabseite aus abstehenden Vorsprüngen zeichnet sich durch eine besonders einfache konstruktive Struktur und mithin leichte und kostengünstige Herstellbarkeit aus.

Nach einer anderen Konkretisierung der Erfindung sind mehrere Stellelemente um das Einrastorgan auf dessen Stabseite - vorzugsweise symmetrisch - verteilt angeordnet. So ist es beispielsweise bereits ausreichend, zwei Stellelemente anzuordnen, die bezüglich des Einrastorgans (als Zentrum) einander diametral gegenüberliegen. Der erzielte Vorteil besteht darin, daß so die Stellelemente auf (notwendigerweise) diametral gegenüberliegende Greifelemente einwirken und dabei diese so radial aufeinander zustellen, daß letztere das Einrastorgan, beispielsweise dessen Kopfteil bei Ausführung als pilzartiger Zapfen, zwischen sich einklemmen und so in Ausrastrichtung sicher festlegen.

Im Rahmen der Erfindung sind vielfältige geometrische Formen zur Gestaltung des Stellelements denkbar. Als praktisch zweckmäßig haben sich Stellelemente in Noppenform oder Kreissegmentform (Profil aus Kurvenstück und Sehne) erwiesen. Die Noppenform läßt sich herstellungstechnisch besonders einfach sowie materialsparend ausführen; bei der Kreissegmentform fördert der gekrümmte Konturabschnitt die Verdrehbarkeit der Gliederstäbe gegeneinander.

Nach der eingangs genannten Fundstelle (DE-OS 1 812 436) liegen die hakenförmigen Greifelemente und der pilzartige Einschnappzapfen mit ihren jeweiligen Anlageflächen formschlüssig und ohne Zwischenraum aneinander. Dies erfordert die Einhaltung hochgenauer Toleranzen bei der Fertigung der geometrischen Maße von Schnapphaken und Einrastzapfen. Dem wird bei einem Gliedermaßstab mit den eingangs genannten Merkmalen nach einer weiteren Erfindungsalternative dadurch begegnet, daß die hintergreifende Anschlagschulter des die Rastaussparung begrenzenden Schnapphakens mit Spiel am Kopfteil des pilzartigen Einschnappvorsprungs anliegt, der pilzartige Einschnappvorsprung in seinem Fußbereich (im Abstand vom Kopfteil) eine Verbreiterung oder radiale Erweiterung besitzt, die beim Einrasten in eine komplementäre Verbreiterung oder Erweiterung der Rastaussparung, vorzugsweise in deren Endkantenbereich, formschlüssig einrückt. Es ergibt sich ein Bewegungsspielraum von Schnapphaken und Kopfteil gegeneinander, der sich vorteilhaft zum Ausgleich unvermeidbarer Fertigungsungenauigkeiten in Maßeinhaltung und Geometrie ausnützen läßt. Mit anderen Worten, die Anforderungen an die Herstellungsgenauigkeit lassen sich aufgrund der genannten Erfindung heruntersetzen, was zu einem verbilligten Gliedermaßstab führt. Mit der Verbreiterung bzw. Erweiterung wird gleichsam ein Führungselement geschaffen, das die (radiale) Genauigkeit und Stabilität der Klappbewegungen der aneinandergelenkten Gliederstäbe gegeneinander fördert.

Nach einer konstruktiven Ausgestaltung dieses Gedankens verläuft die Anlagefläche des Schnapphakens gegenüber der waagrecht gehaltenen Anlagefläche des Kopfteils schräg, wobei insbesondere ein Winkel von nicht größer als 2° gebildet wird.

Weitere Einzelheiten, Merkmale und Vorteile auf der Basis der Erfindung ergeben sich aus der nachfolgenden Beschreibung bevorzugter Ausführungsbeispiele der Erfindung sowie anhand der Zeichnungen. Diese zeigen in :
- Fig. 1: im Rahmen eines ersten Ausführungsbeispiels im Längsschnitt den Anlenkbereich zweier Gliederstäbe,
- Fig. 2: eine Längsansicht / einen Längsschnitt auf diese Gliederstäbe in auseinandergezogener Darstellung,
- Fig. 3: eine Draufsicht in Richtung III gemäß Fig. 2,
- Fig. 4: eine Draufsicht in Richtung IV gemäß Fig. 2,
- Fig. 5: im Rahmen eines zweiten Ausführungsbeispiels einen Längsschnitt durch den Anlenkbereich zweier Gliederstäbe eines Gliedermaßstabs,
- Fig. 6: eine Längsansicht / einen Längsschnitt dieser Gliederstäbe in auseinandergezogener Darstellung,
- Fig. 7: eine Draufsicht auf einen Gliederstab in Richtung VII gemäß Fig. 6,
- Fig. 8: eine Draufsicht auf einen Gliederstab in Richtung VIII gemäß Fig. 6,
- Fig. 9: im Rahmen eines dritten Ausführungsbeispiels einen (teilweisen) Längsschnitt des Anlenkbereichs des Gliedermaßstabs,
- Fig. 10: eine Längsansicht / einen Längsschnitt der gemäß Fig. 9 aneinanderliegenden Gliederstäbe in auseinandergezogener Darstellung,
- Fig. 11: eine Draufsicht auf eine Gliederstabseite in Richtung XI gemäß Fig. 10,
- Fig. 12: im Rahmen eines vierten Ausführungsbeispiels im teilweisen Längsschnitt den Anlenkbereich des Gliedermaßstabs,
- Fig. 13: in Fig. 12 entsprechender Ansicht die Gliederstäbe in auseinandergezogener Darstellung und
- Fig. 14: eine Draufsicht auf eine Gliederstabseite gemäß Richtung XIV in Fig. 13.

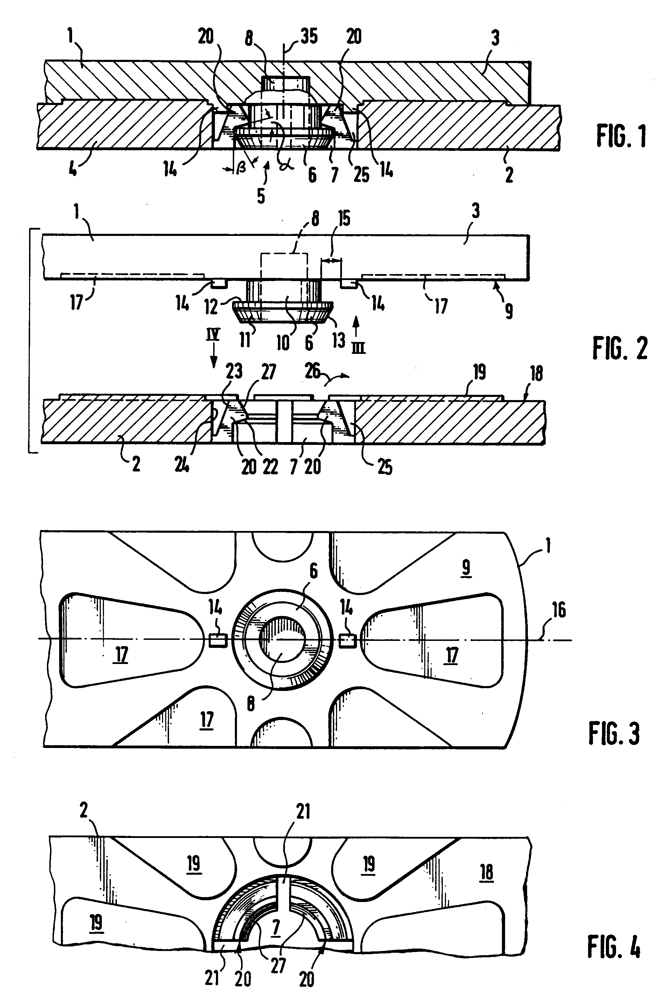

In Fig. 1 ist ein Gliedermaßstab abgebrochen mit dem Abschnitt dargestellt, in dem ein oberer Gliederstab 1 und ein unterer Gliederstab 2 mit ihren Breitseiten aufeinanderliegen, so daß in der Längsschnittdarstellung die jeweiligen Gliederstab-Schmalseiten 3 bzw. 4 sichtbar sind. Damit die Gliederstäbe gegeneinander auf- und zugeklappt bzw. verschwenkt werden können, sind sie über eine Gelenkstelle 5 miteinander verbunden, die als wesentliche Elemente einen pilzförmigen Einschnappvorsprung 6 und eine dazu komplementäre Rastaussparung 7 aufweist. Gemäß Fig. 3 ist der Einschnappvorsprung 6 innen mit einem Hohlraum 8 ausgeführt und steht von der Breitseite 9 des oberen Gliederstabs 1 senkrecht ab (vgl. Fig. 2 oben). Sein Fußteil 10 geht einstückig in den oberen Gliederstab 1 über, während sein freies Ende entsprechend der Pilzform als radial erweiterter Kopfteil 11 ausgebildet ist. Dieser Kopfteil 11 bildet an seiner der oberen Breitseite 9 zugewandten Rückseite eine kreisringförmige Eingriffsfläche 12, und seine Außenwandung geht zum stirnseitigen Ende hin in einen sich konisch verjüngenden Gleitabschnitt 13 über. Dieser bildet mit der Achsrichtung 35 des Einschnappvorsprungs 6 einen Winkel β, der vorzugsweise größer als 30° ist.

Wie vor allem aus Fig. 3 ersichtlich, springen von der Breitseite 9 des oberen Gliederstabs 1 zwei rechteckförmige Noppen 14 vor, die bezüglich des Einschnappvorsprungs 6 einander diametral gegenüberliegen und gegenüber dessen Fußteil 10 in einem Abstand 15 angeordnet sind. Im gezeichneten Ausführungsbeispiel (vgl. insbesondere Fig. 3) entspricht die gemeinsam von den beiden diametralen Noppen 14 gebildete Flucht der mittleren Längsachse 16 des oberen Gliederstabs 1. Ferner sind gemäß Fig. 3 Feststell-Vertiefungen 17 in die Breitseite des oberen Gliederstabs 1 eingelassen, deren Längsrichtung ebenfalls der mittleren Längsachse 16 entspricht.

Mit diesen Feststellvertiefungen 17 korrespondieren komplementär geformte und von der Breitseite 18 des unteren Gliederstabs 2 erhabene Feststellerhöhungen 19. Die Rastaussparung 7 bildet einen Durchbruch des unteren Gliederstabs 2 und ist zum größten Teil von vier Schnapphaken 20 begrenzt. In Fig. 4 ist in Draufsicht der Einfachheit halber nur eine Hälfte des unteren Gliederstabs 2 gezeichnet, so daß nur zwei der insgesamt vier Schnapphaken 20 sichtbar sind. Ihre Grundform entspricht einzelnen Kreisringabschnitten bzw. -sektoren, die durch radiale Schlitze 21 voneinander beabstandet sind. Im Vertikal-Längsschnitt gemäß Fig. 1 und 2 ist ihr hakenartiges Profil mit der schrägflächigen Anschlagsschulter 22 erkennbar. An der Unterkante der Rastaussparung 7 sind die Schnapphaken 20 direkt mit dem unteren Gliederstab 2 verbunden, während ihre Rückseiten 23 gegenüber der Aussparungs-Innenwandung 24 nach radial innen divergieren. Hierdurch wird ein sich in Achsrichtung zum gegenüberliegenden, oberen Gliederstab 1 verbreiternder Spielraum 25 zwischen Aussparungswandung 24 und Schnapphaken-Rückseite 23 begrenzt, der ein radial federndes Schwenken 26 des Schnapphakens 20 (um eine Achse senkrecht zur Zeichenebene) ermöglicht.

Nachfolgend sei anhand der Fig. 1 und 2 die Montage und Funktionsweise dieser Gelenkstelle 5 näher erläutert: Zur Montage werden die gemäß Fig. 2 auseinanderliegenden oberen bzw. unteren Gliederstäbe 1, 2 derart aufeinander zubewegt, daß der konische Gleitabschnitt 13 des Einschnappvorsprungs 6 an den Schnapphaken 20 zunächst auf deren Trichterflächenabschnitt 27 gleitet. Dessen Schrägstellung entspricht dem Winkel β des Gleitabschnitts 13. Da β möglichst groß gewählt ist, entstehen radial gerichtete Kraftkomponenten beim Eindrücken des Einschnappvorsprungs 6, so daß den einzelnen Schnapphaken 20 eine Schwenkbewegung 26 nach außen erteilt wird. Mit zunehmendem Einrücken des Einschnappvorsprungs 6 in die Rastaussparung 7 gerät die Eingriffsfläche 12 hinter die Anschlagschultern 22 der dann zurückfedernden Schnapphaken 20, so daß von diesen der Kopfteil 11 hintergriffen und in Ausrastrichtung arretiert ist. Gleichzeitig sind die Noppen 14 in den ringartigen Spielraum 25 zwischen Aussparungs-Innenwandung 24 und Schnapphaken-Rückseite 23 eingerückt und blockieren ein Verschwenken 26 der Schnapphaken 20 nach radial außen. Mithin ist der Kopfteil 11 des Einschnappvorsprungs 6 fest umfaßt und sicher gehalten, selbst wenn beim Auf- und Zuklappen des Maßstabs die einzelnen Gliederstäbe wegen der Anordnung der Feststell-Vertiefungen und -Erhöhungen 17, 19 elastisch voneinander abgehoben werden. Die Auf- und Zuklappbarkeit ist zudem durch einen Winkel α gefördert, der einerseits von der Eingriffsfläche des Kopfteils 11 und andererseits von der dieser gegenüber schrägen Anschlagschulter 22 begrenzt ist. Ferner dient dieser Winkel α, der vorzugsweise möglichst klein gewählt ist, zum Ausgleich von unvermeidlichen Herstellungstoleranzen des Einschnappvorsprungs 6 und/oder der Rastaussparung 7.

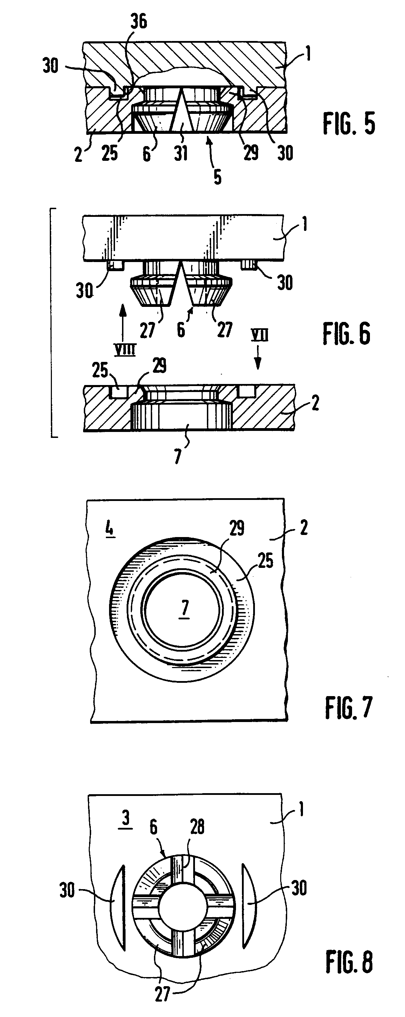

Das Ausführungsbeispiel nach Fig. 5 - 8 unterscheidet sich durch eine andere Form und/oder Gestaltung des Einschnappvorsprungs 6, der Rastaussparung 7 und der mit dem Einschnappvorsprung 6 gekoppelten Stellelemente: Wie insbesondere aus Fig. 8 ersichtlich, ist der Einschnappvorsprung 6 aus vier einzelnen Kreisringabschnitten 27 gebildet, die durch radiale Schlitze 28 voneinander beabstandet sind. Die Rastaussparung 7 weist einen einzigen Schnapphaken 29 auf, der darin als konzentrisch umlaufender Ringhaken angeordnet ist. Dieser drückt beim "Einknöpfen" des Einschnappvorsprungs 6 dessen in Umfangsrichtung beabstandete Kreisringabschnitte 27 nach radial innen zusammen, bis er mit zunehmendem Einrücken deren pilzförmig erweiterte Kopfteile hintergreift. Dabei rücken die im Grundriß kreissegmentförmigen Erhebungen 30 in die - analog zum ersten Ausführungsbeispiel gebildeten - Stell- oder Spielräume 25 ein und verhindern eine etwaige Verstellung des Ringschnapphakens 29 nach radial außen. Um beim Abheben des oberen Gliederstabs 1 vom unteren Gliederstab 2 (wenn diese gegeneinander verschwenkt werden) ein Verschwenken der einzelnen Kreisringabschnitte 27 des Einschnappvorsprungs 6 nach radial innen zu verhindern, ist ein kegelförmiger Freiraum 31 im mittleren Achsbereich des Einschnappvorsprungs 6 aufgrund der keilförmigen Radialschlitze 28 ausgespart, in welchen ein drittes Element, beispielsweise ein komplementärer Bolzen (nicht gezeichnet), eingesetzt werden könnte. Im übrigen gelten die Ausführungen zum ersten Ausführungsbeispiel entsprechend.

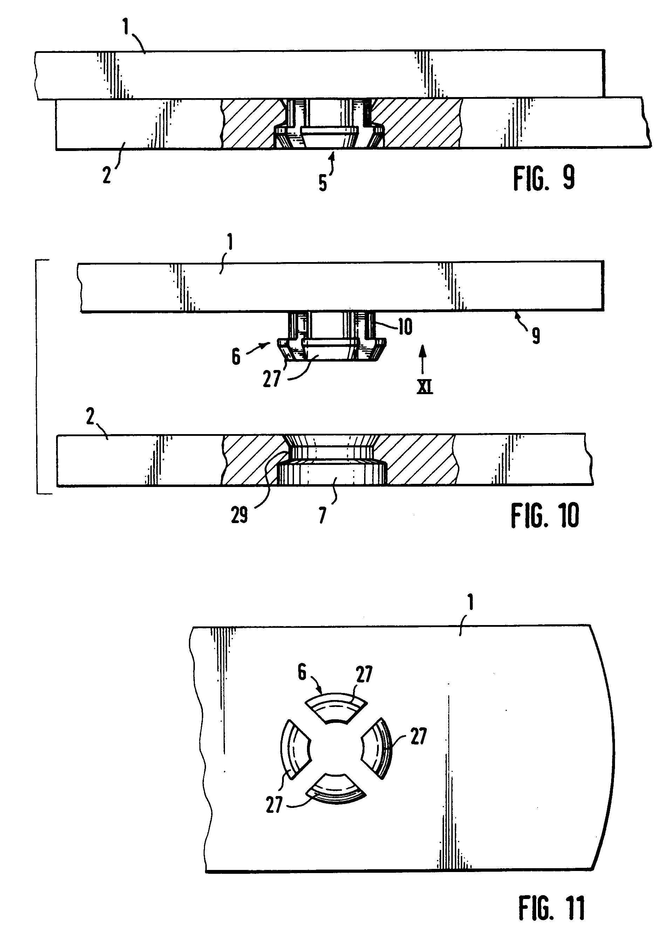

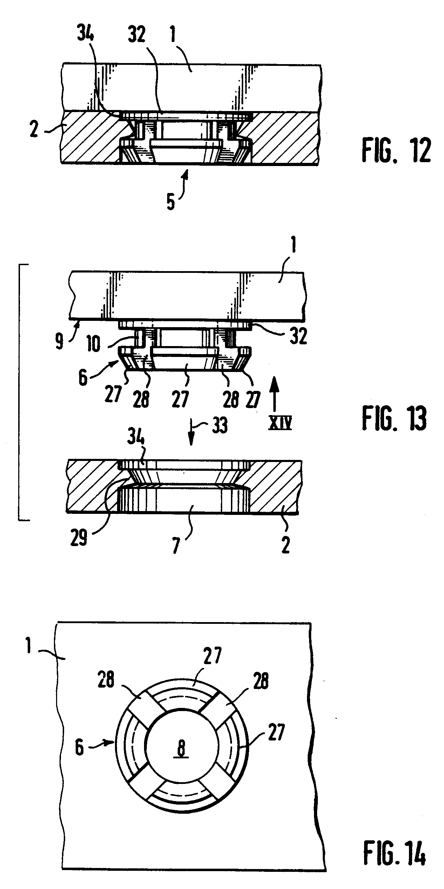

Das dritte Ausführungsbeispiel gemäß Fig. 9 - 11 stimmt mit dem zweiten Ausführungsbeispiel mit der Ausnahme überein, daß Feststellelemente, z.B. in Form der Kreissegment-Erhebungen 30, für den Kreisring-Schnapphaken 29 weggelassen sind. Beim analogen vierten Ausführungsbeispiel gemäß Fig. 12 - 14 ist der Fußteil 10 des Einschnappvorsprungs 6 noch um eine ringartige Verbreiterung 32 radial erweitert, die unmittelbar an die Breitseite 9 des oberen Gliederstabs 1 angrenzt. Mit dieser Verbreiterung 32 korrespondiert eine komplementäre Erweiterung 34 der Rastaussparung 7. Nach dem "Einknöpfen" des Einschnappvorsprungs 6 - in Bewegungsrichtung 33 - ergibt sich die in Fig. 12 dargestellte Gelenkstelle 5, analog zu den Fig. 1, 5 und 9. Stellelemente zum Hintergreifen des Ringschnapphakens 29 sind - wie beim dritten Ausführungsbeispiel - weggelassen. Ferner ist auf die Ausbildung des Kegelfreiraums 31 des dritten Ausführungsbeispiels für ein etwaiges separates (drittes) Feststellteil verzichtet.

## Patentansprüche

1. Gliedermaßstab, insbesondere aus Kunststoff, dessen einzelne Gliederstäbe (1, 2) an ihren benachbarten Enden über Rastaussparungen (7) einerseits und komplementäre Einrastorgane (6) andererseits drehgelenkig aneinandergereiht sind, wobei die Rastaussparung (7) ein oder mehrere, selbsttätige und/oder betätigbare Greifelemente (20, 29) aufweisen, welche das eingerastete Einrastorgan (6) in Ausrastrichtung arretieren, gekennzeichnet durch ein oder mehrere, mit dem Einrastorgan (6) gekoppelte oder verbundene Stellelemente (14, 30), welche nach dem Einrasten des Einrastorgans mit einem oder mehreren zugeordneten Greifelementen (20, 29) derart zusammen Wirken, daß das Einrastorgan (6) in Ausrastrichtung arretiert wird.

2. Gliedermaßstab nach Anspruch 1, dadurch gekennzeichnet, daß das Einrastorgan (6) als von einer Stabseite (9) vorspringender Zapfen mit pilzförmig erweitertem Kopfteil (11) ausgeführt ist.

3. Gliedermaßstab nach Anspruch 2, dadurch gekennzeichnet, daß ein oder mehrere Greifelemente (20, 29) als die Rastaussparung (7) begrenzende und federnd nach außen verstellbare Schnapphaken ausgeführt sind, die den eingerasteten Kopfteil (11) umgreifen.

4. Gliedermaßstab nach Anspruch 3, dadurch gekennzeichnet, daß die Stellelemente (14, 30) als Vorsprünge einer Stabseite (9) derart ausgebildet und angeordnet sind, daß sie beim Einrasten einen oder mehrere Schnapphaken (20, 29) von außen verriegeln, insbesondere hintergreifen oder mit Spielraum (36) blockieren.

5. Gliedermaßstab nach einem der vorangehenden Ansprüche, dadurch gekennzeichnet, daß mehrere Stellelemente (14, 30) um das Einrastorgan (6) auf dessen Stabseite (9) verteilt angeordnet sind.

6. Gliedermaßstab nach Anspruch 5, gekennzeichnet durch zwei Stellelemente (14, 30), die bezüglich des Einrastorgans (6) einander diametral (16) gegenüberliegen.

7. Gliedermaßstab nach einem der vorangehenden Ansprüche, dadurch gekennzeichnet, daß das oder die Stellelemente als noppenartige (14) und/oder kreissegmentförmige Erhebungen (30) ausgeführt sind.

8. Gliedermaßstab insbesondere aus Kunststoff, dessen einzelne Gliederstäbe (1, 2) an ihren benachbarten Enden über einen oder mehrere, eine Rastaussparung (7) begrenzende Schnapphaken (20, 29) einerseits und einen komplementären Einschnappvorsprung (6) mit pilzartig erweitertem, radial geschlitzten (21, 28) und federnd zusammendrückbaren Kopfteil (11) andererseits drehgelenkig aneinandergereiht sind, wobei der Schnapphaken (20, 29) beim Einrasten den Kopfteil (11) umgibt, dadurch gekennzeichnet, daß die umgebende Anschlagschulter (22) des Schnapphakens (20, 29) jeweils mit Spiel (α) das Kopfteil (11) hintergreift und/oder am Kopfteil (11) anliegt, wobei der Einschnappvorsprung (6) in seinem Fußbereich (10) eine Verbreiterung (32) oder radiale Erweiterung besitzt, die beim Einrasten in eine komplementäre Verbreiterung oder Erweiterung (34) der Rastaussparung (7), vorzugsweise in deren Endkantenbereich, formschlüssig einrückt.

9. Gliedermaßstab nach Anspruch 8, dadurch gekennzeichnet, daß die beiderseitigen Anlageflächen (22, 12) einen Winkel (α) von größer als 0° und kleiner als etwa 2° einschließen.

10. Gliedermaßstab nach Anspruch 8 oder 9, dadurch gekennzeichnet, daß die Anlagefläche oder Anschlagschulter (22) des Schnapphakens (20, 29) gegenüber der waagrechten Eingriffs- oder Anlagefläche (12) des Kopfteils (11) schräg (α) verläuft.

11. Gliedermaßstab nach Anspruch 8, 9 oder 10, dadurch gekennzeichnet, daß die Verbreiterung oder Erweiterung (32) des Einschnappvorsprungs (6) unmittelbar an die Stabseite (9) angrenzt.

## Claims

1. Folding rule, made in particular from plastics material, whose individual folding members (1, 2) are linked together in series by rotary joints at their adjacent ends via catch recesses (7) on the one side and complementary engaging elements (6) on the other side, the catch recess (7) having one or more automatic and/or actuatable grip elements (20, 29), which lock the engaged engaging element (6) in the disengaging direction, characterised by one or more actuators (14, 30), which are coupled or connected to the engaging element (6) and which, after engagement of the engaging element, so cooperate with one or more associated grip elements (20, 29) that the engaging element (6) is locked in the disengagement direction.

2. Folding rule according to claim 1, characterised in that the engaging element (6) is formed as a peg projecting from one stick side (9) with a head portion (11) which is expanded in the form of a mushroom.

3. Folding rule according to claim 2, characterised in that one or more grip elements (20, 29) are formed as snap-lock hooks, which define the catch recess (7), are resiliently displaceable towards the outside, and grasp the engaged head portion (11).

4. Folding rule according to claim 3, characterised in that the actuators (14, 30) are so formed as lugs on one stick side (9) and are so arranged that upon engagement they lock one or more snap-lock hooks (20, 29) from the outside, in particular engage thereunder or lock the hooks with clearance (36).

5. Folding rule according to one of the preceding claims, characterised in that a plurality of actuators (14, 30) are arranged distributed around the engaging element (6) on its stick side (9).

6. Folding rule according to claim 5, characterised by two actuators (14, 30) which are disposed diametrically opposite one another with respect to the engaging element (6).

7. Folding rule according to one of the preceding claims, characterised in that the actuator(s) is or are formed as knob-like (14) and/or circular segment-shaped projections (30).

8. Folding rule, made in particular from plastics material, whose individual folding members (1, 2) are connected together in series by rotary joints at their adjacent ends via one or more snap-lock hooks (20, 29) defining a catch recess (7) on the one side and a complementary engaging snap-lock lug (6) having a resiliently compressible head portion (11) on the other side, which is expanded in a mushroom-like manner and which has radial slots (21, 28), wherein the snap-lock hook (20, 29) surrounds the head portion (11) in the engaged state, characterised in that the surrounding stop shoulder (22) of the snap-lock hook (20, 29) respectively engages under the head portion (11) with clearance (α) and/or abuts the head portion (11), wherein the engaging snap-lock lug (6) has at its base (10) a widened (32) or radially expanded portion, which engages with positive locking in a complementary widened region (34) of the catch recess (7), preferably in its rear edge region.

9. Folding rule according to claim 8, characterised in that the bilateral contact faces (22, 12) include an angle (α) of more than 0° and less than approximately 2°.

10. Folding rule according to claim 8 or 9, characterised in that the contact face or stop shoulder (22) of the snap-lock hook (20, 29) extends transverse (α) to the horizontal engagement face or contact face (12) of the head portion (11).

11. Folding rule according to claim 8, 9 or 10, characterised in that the widened or expanded region (32) of the engaging snap-lock lug (6) directly abuts the stick side (9).

## Revendications

1. Règle de mesure pliante, notamment en matière synthétique, dont les branches individuelles (1, 2) sont, à leurs extrémités voisines, articulées l'une à l'autre en succession par l'intermédiaire, d'une part, d'évidements d'encliquetage (7) et, d'autre part, d'organes d'encliquetage complémentaires (6), l'évidement d'encliquetage présentant un ou plusieurs éléments d'agrippage (20, 29) automatiques et/ou actionnables, lesquels arrêtent l'organe d'encliquetage (6) encliqueté dans la direction de désencliquetage, caractérisée par un ou plusieurs éléments de positionnement (14, 30) couplés ou reliés à l'organe d'encliquetage (6), lesquels, après l'encliquetage de l'organe d'encliquetage, coopèrent avec un ou plusieurs éléments d'agrippage (20, 29) associés d'une façon telle, que l'organe d'encliquetage (6) est arrêté dans la direction de désencliquetage.

2. Règle de mesure pliante selon la revendication 1, caractérisée en ce que l'organe d'encliquetage (6) est réalisé sous la forme d'un téton saillant d'un côté de branche (9) et comportant une partie de tête (11) élargie en forme de champignon.

3. Règle de mesure pliante selon la revendication 2, caractérisée en ce qu'un ou plusieurs éléments d'agrippage (20, 29) sont réalisés sous la forme de crochets faisant ressort, limitant l'ouverture d'encliquetage (7) et déplaçables élastiquement vers l'extérieur, qui enserrent la partie de tête (11) encliquetée.

4. Règle de mesure pliante selon la revendication 3, caractérisée en ce que les éléments de positionnement (14, 30) sont constitués et agencés comme des saillies à un côté de branche (9) d'une façon telle, que, lors de l'encliquetage, ils verrouillent un ou plusieurs crochets faisant ressort (20, 29) de l'extérieur, en particulier viennent en prise derrière ceux-ci ou les bloquent avec un espace de jeu (36).

5. Règle de mesure pliante selon l'une des revendications précédentes, caractérisée en ce que plusieurs éléments de positionnement (14, 30) sont agencés répartis autour de l'organe d'encliquetage (6) sur le côté de branche (9) de celle-ci.

6. Règle de mesure pliante selon la revendication 5, caractérisée par deux éléments de positionnement (14, 30), qui sont dans des positions diamétralement opposées l'une à l'autre (16) par rapport à l'organe d'encliquetage (6).

7. Règle de mesure pliante selon l'une des revendications précédentes, caractérisée en ce que le ou les éléments de positionnement sont réalisés comme des élévations du type nappe (14) et/ou en forme de segment de cercle (30).

8. Règle de mesure pliante, notamment en matière synthétique, dont les branches individuelles (1, 2) sont, à leurs extrémités voisines, articulées l'une à l'autre en succession par l'intermédiaire, d'une part, d'un ou de plusieurs crochets faisant ressort (20, 29) limitant un évidement d'encliquetage (7) et, d'autre part, d'une saillie encliquetable complémentaire (6) comportant une partie de tête (11) élargie à la manière d'un champignon, fendue radialement (21, 28) et pouvant être comprimée élastiquement, les crochets faisant ressort (20, 29) entourant la partie de tête (11) lors de l'encliquetage, caractérisée en ce que chacun des épaulements périphériques de butée (22) des crochets faisant ressort (20, 29) s'engage, avec du jeu (α), derrière la partie de tête (11) et/ou s'applique à la partie de tête (11), la saillie encliquetable (6) possédant, dans sa région de pied (10), un élargissement (32) ou une extension radiale, qui, lors de l'encliquetage, rentre avec complémentarité de formes dans un élargissement ou une extension complémentaire (34) de l'évidement d'encliquetage (7) ; de préférence dans la région d'arête d'extrémité de celui-ci.

9. Règle de mesure pliante selon la revendication 8, caractérisée en ce que les faces d'appui des deux côtés (22, 12) embrassent un angle (α) plus grand que 0° et plus petit qu'à peu près 2°.

10. Règle de mesure pliante selon la revendication 8 ou 9, caractérisée en ce que la face d'appui ou épaulement de butée (22) du crochet faisant ressort (20, 29) s'étend obliquement (α) par rapport à la face horizontale d'accrochage ou d'appui (12) de la partie de tête (11).

11. Règle de mesure pliante selon la revendication 8, 9 ou 10, caractérisée en ce que l'élargissement ou l'extension (32) de la saillie encliquetable (6) est directement contiguë au côté de branche (9).
